# EUROPEAN PATENT APPLICATION

(11) **EP 3 220 256 A1**
(43) Date of publication of application: **20.09.2017**
(21) Application number: 16182317.4
(22) Date of filing: 02.08.2016
(51) Int. Cl.: G06F 3/12, H04N 1/00, H04N 1/44

(54) **PRINTING WITH PRIORITY FOR PRINT JOBS RECEIVED VIA A WIRELESS CONNECTION**

(30) Priority: 18.03.2016 JP 2016055526
(71) Applicant: Fuji Xerox Co., Ltd., Minato-ku, Tokyo (JP)
(72) Inventor: SUZUKI, Tatsuro, Yokohama-shi, Kanagawa (JP); HAGINO, Kenichi, Yokohama-shi, Kanagawa (JP)
(74) Representative: Ward, James Norman

(57) **Abstract**

An image forming apparatus includes a receiving unit that receives print instruction information to print data, a memory that stores the print instruction information received by the receiving unit, a management unit that manages an output order of the print instruction information, an execution unit that executes a printing process according to the print instruction information in the output order, and a near field communication unit that performs near field communication. In a case where a connection via the near field communication is established, and when the receiving unit receives print instruction information through the near field communication unit, and where there is print instruction information previously stored in the memory, the management unit gives priority to print instruction information received through the near field communication unit over print instruction information previously stored in the memory.

## Description

### BACKGROUND

### Technical Field

The present invention relates to an information processing apparatus, an information processing method, and an information processing program.

### Related Art

An NFC supporting device capable of executing communication (hereinafter, "near field communication (NFC) communication") according to an NFC standard has been put into practical use, and a communication system using a peer to peer (P2P) mode in which two-way communication is performed between a pair of NFC supporting devices has been proposed (for example, see JP 2015-69458 A).

This communication system includes a mobile terminal serving as an NFC supporting device and a multifunction peripheral (MFP). When the mobile terminal is passed over the MFP in the P2P mode, a user ID, image data, portable document format (PDF) data, and the like stored in the mobile terminal are transmitted to the MFP, and printing is performed.

### SUMMARY

Meanwhile, when a user transmits print instruction information to give instructions to print data from a terminal device to an image forming apparatus via a network, there may be plural pieces of print instruction information that waits to be printed in the image forming apparatus. In this configuration, when the P2P mode is used, performing an operation of passing the terminal device as well as an operation of selecting the print instruction information may become a burden on the user.

An object of at least embodiments of the present invention is to provide an information processing apparatus, an information processing method, and an information processing program that enable to perform a printing process through an operation of passing the terminal device without performing an operation of selecting a file to be printed.

[1] According to an aspect of the invention, there is provided an information processing apparatus including: a receiving unit that receives print instruction information to print data; a memory that stores the print instruction information received by the receiving unit; a management unit that manages an output order of the print instruction information; an execution unit that executes a printing process according to the print instruction information in the output order; and a near field communication unit that performs near field communication. In a case where a connection via the near field communication is established, where the receiving unit receives the print instruction information, and where there is a print instruction information previously stored in the memory, the management unit gives priority to the print instruction information in the output order over the print instruction information previously stored in the memory.

[2] In the information processing apparatus according to [1], in a case where the execution unit is executing a printing process according to the print instruction information previously stored in the memory, the management unit may give the priority to the print instruction information in the output order over the print instruction information previously stored in the memory by an interrupt processing in which the printing process being executed is temporarily interrupted.

[3] According to another aspect of the invention, there is provided an information processing method including: receiving print instruction information to print data; storing the print instruction information received in a memory; executing a printing process according to the print instruction information in an output order; and managing the output order of the print instruction information such that, in a case where the print instruction information is received in a state where a connection via the near field communication is established, and where there is a print instruction information previously stored in the memory, the print instruction information is given priority in the output order over the print instruction information previously stored in the memory.

[4] According to another aspect of the invention, there is provided an information processing program causing a computer to function as: a receiving unit that receives print instruction information to print data and causes the print instruction information to be stored in a memory; an execution unit that executes a printing process according to the print instruction information in an output order, and a management unit that manages the output order of the print instruction information such that, in a case where the print instruction information is received in a state where a connection via the near field communication is established, and where there is a print instruction information previously stored in the memory, the print instruction information is given priority in the output order over the print instruction information previously stored in the memory.

According to the information processing apparatus of [1], the information processing method of [3], and the information processing program of [4], it is possible to perform a printing process through an operation of passing the terminal device without performing an operation of selecting a file to be printed.

According to the information processing apparatus of [2], it is possible to promptly print image data stored in a terminal device even when there is print instruction information being executed.

### BRIEF DESCRIPTION OF DRAWINGS

Exemplary embodiments of the present invention will be described in detail based on the following figures, wherein:
Fig. 1 is a block diagram functionally illustrating an exemplary configuration of an information processing system according to an exemplary embodiment of the present invention;
Figs. 2A and 2B are diagrams illustrating an exemplary print instruction information list;
Fig. 3 is a flowchart illustrating an exemplary operation of an image forming apparatus when a selection operation of selecting a file to be printed is performed; and
Fig. 4 is a flowchart illustrating an exemplary operation of an image forming apparatus when a selection operation of selecting a file to be printed is omitted.

### DETAILED DESCRIPTION

Hereinafter, an exemplary embodiment of the present invention will be described with reference to the appended drawings. In the drawings, components having substantially the same function are denoted by the same reference numerals, and a duplicated description will be omitted. In the exemplary embodiment, an image processing apparatus will be described as an exemplary information processing apparatus, but the information processing apparatus may be any other information processing apparatus.

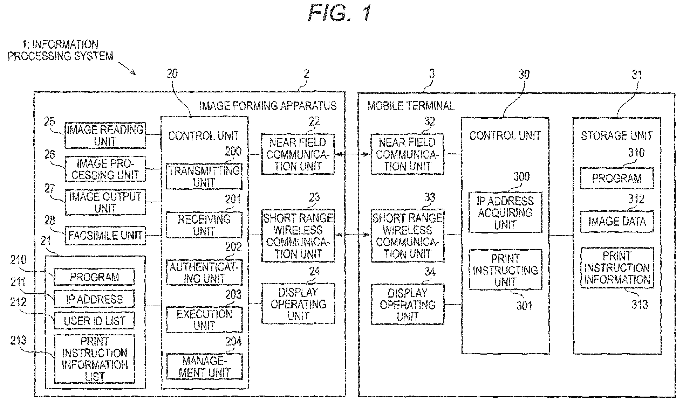

Fig. 1 is a block diagram functionally illustrating an exemplary configuration of an information processing system according to an exemplary embodiment of the present invention. An information processing system 1 is configured such that an image forming apparatus 2 and a mobile terminal 3 are connected so that wireless communication can be performed therebetween.

### (Configuration of image forming apparatus)

The image forming apparatus 2 is a multifunction device having plural functions such as a copy function, a scanning function, a printing function, and a facsimile function, and includes a control unit 20 that controls respective units of the image forming apparatus 2, and a storage unit 21, a near field communication unit 22, a short range wireless communication unit 23, a display operating unit 24, an image reading unit 25, an image processing unit 26, an image output unit 27, and a facsimile unit 28 are connected to the control unit 20.

The near field communication unit 22 performs near field communication in which a communicable distance is, for example, about 10 cm or less with a near field communication unit 32 of the mobile terminal 3. As such communication, in the exemplary embodiment, for example, NFC communication in which the P2P mode is possible is used.

The storage unit 21 is implemented by a read only memory (ROM), a random access memory (RAM), a hard disk, or the like, and stores a program 210, an IP address 211 allocated to its own apparatus, a user ID list 212, a print instruction information list 213, and the like. Here, the IP address 211 is exemplary identification information of the image forming apparatus. The program 210 is an exemplary information processing program.

A user ID accessible to the image forming apparatus 2 is registered in the user ID list 212 in advance. Here, the user ID is exemplary identification information of the user. When the mobile terminal 3 uses an individual identification number, the user ID and the individual identification number are included in the user ID list 212. One or two or more pieces of print instruction information are stored in the print instruction information list 213. The storage unit 21 may not store the user ID list 212. In this case, for example, a server stores the user ID list 212, and the image forming apparatus 2 transmits a user authentication request to the server via a network.

When the near field communication unit 22 and the near field communication unit 32 of the other party are within the communicable distance, for example, when a distance between antennas is about 10 cm or less, a connection via the near field communication is established. Further, in the state where the near field communication unit 22 and the near field communication unit 32 of the other party are within the communicable distance, and thus the connection is established, when the near field communication unit 32 of the other party deviates from the communicable distance, the connection via the near field communication is cut.

The short range wireless communication unit 23 performs short range wireless communication with a short range wireless communication unit 33 of the mobile terminal 3 within a communicable distance larger than that of the near field communication unit 22, for example, a distance of about 100 m or less. As such communication, for example, a wireless local area network (LAN) with intervention of a LAN router such as a wireless fidelity (Wi-Fi) or wireless communication with no intervention of a LAN router such as Wi-Fi Direct or Bluetooth (a registered trademark) may be used.

The display operating unit 24 includes a touch panel display in which a touch panel is superimposed on a display unit such as a liquid crystal display, and causes an operation screen to be displayed on the display unit and receives an operation on the touch panel from an operator.

The image reading unit 25 is configured, for example, with a scanner, and reads and receives image data from an original. The image processing unit 26 performs image processing such as compression, decompression, and synthesis on the image data input from the image reading unit 25 or the like. The image output unit 27 includes, for example, an image holding member by a photoconductor, forms an image on a recording medium such as a sheet, and outputs the resulting medium. The facsimile unit 28 performs modulation and demodulation on data according to a facsimile protocol such as G3 or G4, and performs facsimile communication via a telephone line.

The control unit 20 is configured with a central processing unit (CPU), an interface, and the like. The CPU operates according to a program 10 stored in the storage unit 21 and thus functions as a transmitting unit 200, a receiving unit 201, an authenticating unit 202, an execution unit 203, a management unit 204, and the like and executes the P2P mode.

When the near field communication unit 22 establishes the connection of the near field communication with the near field communication unit 32 of the mobile terminal 3, the transmitting unit 200 reads the IP address 211 from the storage unit 21, and transmits the IP address 211 to the mobile terminal 3 through the near field communication unit 22.

The receiving unit 201 receives the print instruction information to instruct printing of image data. The receiving unit 201 may receive the print instruction information transmitted from a terminal device (not illustrated) via a network (which may be short range wireless communication), and the receiving unit 201 may receive print instruction information 313 through the near field communication unit 22 when the operation of passing the mobile terminal 3 is performed.

The authenticating unit 202 performs an authentication process of permitting printing of the print instruction information 313. Specifically, the authenticating unit 202 performs the user authentication process based on the user ID received by an operation on the display operating unit 24, that is, determines whether or not the received user ID is registered in the user ID list 212 of the storage unit 21, and permits a next process when the user ID is registered in the user ID list 212 of the storage unit 21, that is, when the authentication is approved. The authenticating unit 202 may authenticate the user based on the user ID and the password.

The execution unit 203 performs the printing process according to the print instruction information 313 in the output order of the print instruction information managed by the management unit 204 which will be described later. In other words, the execution unit 203 controls the image output unit 27 such that image data is printed under a printing condition set by the print instruction information 313. The image output unit 27 prints image data on a recording medium such as a sheet under the printing condition set by the print instruction information 313. The execution unit 203 may control the image processing unit 26 or the facsimile unit 28 such that a process is performed depending on instruction information received from the receiving unit 201.

When the print instruction information selected by the operation on the display operating unit 24 among the print instruction information included in the print instruction information list 213 is printed, the execution unit 203 performs the printing process when the authentication is approved but rejects the printing process when the authentication is not approved.

The management unit 204 allocates a print instruction information ID to the print instruction information as a management number according to an order in which the print instruction information is received by the receiving unit 201, and manages the output order of the print instruction information. When the print instruction information 313 is received by the receiving unit 201 in the state in which the connection of the near field communication is established, and there is other print instruction information in the storage unit 21, the management unit 204 gives a priority to the output order of the print instruction information 313 to be earlier than that of other print instruction information.

Some or all of the transmitting unit 200, the receiving unit 201, the authenticating unit 202, the execution unit 203, and the management unit 204 may be configured with a hardware circuit such as a field programmable gate array (FPGA) or an application specific integrated circuit (ASIC).

### (Configuration of mobile terminal)

The mobile terminal 3 includes a control unit 30 that controls respective units of the mobile terminal 3, and a storage unit 31, the near field communication unit 32, the short range wireless communication unit 33, and a display operating unit 34 are connected to the control unit 30. The mobile terminal 3 may be a personal computer, a tablet type computer, a multifunctional telephone (smart phone), a mobile phone, or the like.

The storage unit 31 is implemented by a ROM, a RAM, a hard disk, or the like, and stores a program 310, image data 312, the print instruction information 313, and the like.

The near field communication unit 32 performs the near field communication with the near field communication unit 22 of the image forming apparatus 2, and has the same function as the near field communication unit 22 of the image forming apparatus 2.

The short range wireless communication unit 33 performs the short range wireless communication with the short range wireless communication unit 23 of the image forming apparatus 2, and has the same function as the short range wireless communication unit 23 of the image forming apparatus 2.

The display operating unit 34 includes a touch panel display in which a touch panel is superimposed on a display unit such as a liquid crystal display, and causes an operation screen to be displayed on the display unit and receives an operation on the touch panel from an operator.

The control unit 30 is configured with a CPU, an interface, and the like. The CPU operates according to the program 310 stored in the storage unit 31 and thus functions as an IP address acquiring unit 300, a print instructing unit 301, a transmitting unit 302, and the like, and executes the P2P mode.

When the near field communication unit 32 establishes the connection via the near field communication with the near field communication unit 22 of the image forming apparatus 2, the IP address acquiring unit 300 acquires the IP address 211 of the image forming apparatus 2 through the near field communication unit 32. The IP address acquiring unit 300 notifies the print instructing unit 301 of the acquired IP address 211.

The print instructing unit 301 transmits the print instruction information 313 to instruct the image forming apparatus 2 of the corresponding IP address 211 to print the image data through the short range wireless communication unit 33 using the IP address as the transmission destination.

Some or all of the IP address acquiring unit 300 and the print instructing unit 301 may be configured with a hardware circuit such as an FPGA or an ASIC. The IP address acquiring unit 300 may be executed by an operating system (OS), and the print instructing unit 301 may be executed by application software.

### (Operation of information processing system)

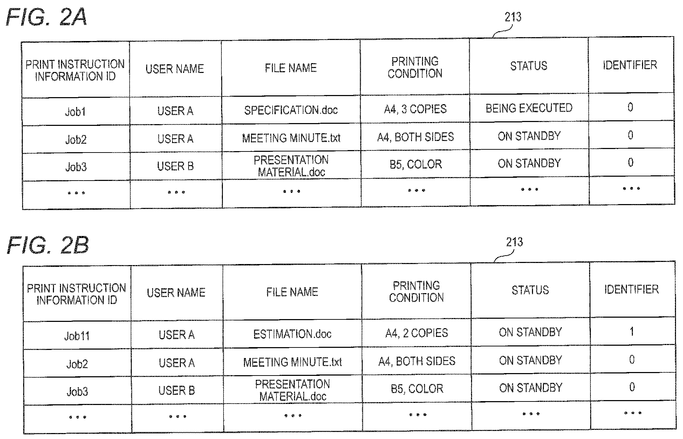

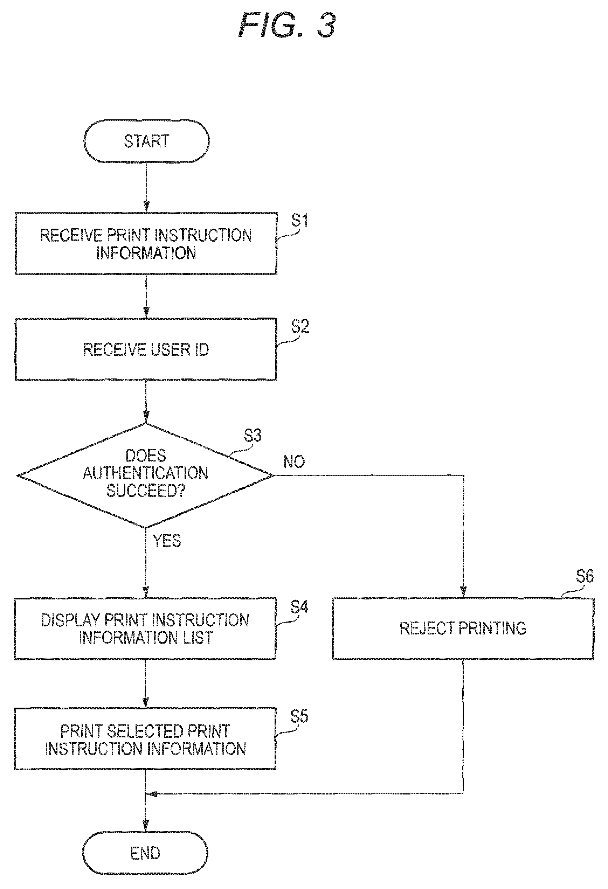

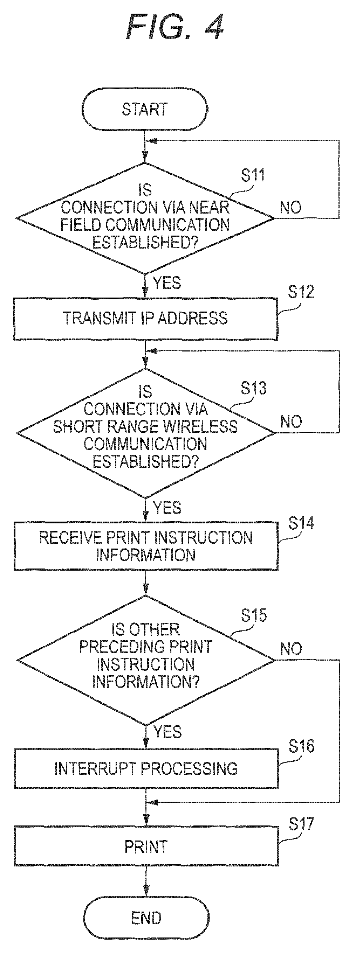

Next, an exemplary operation of the information processing system 1 will be described with reference to Figs. 2A to 4. Figs. 2A and 2B are diagrams illustrating an example of the print instruction information list 213. Fig. 3 is a flowchart illustrating an exemplary operation of the image forming apparatus 2 in a case where a selection operation of selecting a file to be printed is performed. Fig. 4 is a flowchart illustrating an exemplary operation of the image forming apparatus 2 in a case where the selection operation of selecting a file to be printed is omitted.

### (1) In a case where selection operation of the file to be printed is performed

First, the user operates the terminal device (not illustrated) to select image data of a file to be printed, set the printing condition for the selected image data such as a color/monochrome and the number of sheets to be printed, and generate the print instruction information. The user operates the terminal device to transmit the print instruction information to the image forming apparatus 2 via a network.

Upon receiving the print instruction information via the network (S1), the receiving unit 201 of the image forming apparatus 2 causes the received print instruction information to be stored in the print instruction information list 213 of the storage unit 21.

When the user ID is input from the display operating unit 24 (S2), the authenticating unit 202 determines whether or not the user ID is registered in the user ID list 212 (S3). The authenticating unit 202 notifies the execution unit 203 of the authentication result.

When the authentication succeeds (Yes in S3), the execution unit 203 causes the print instruction information list 213 to be displayed on the display operating unit 24 (S4). For example, when the print instruction information list 213 illustrated in Fig. 2A is stored in the storage unit 21, if a user name of the user is assumed to be a user A, and the user A operates the display operating unit 24 to select the print instruction information that is desired to be printed, for example, the print instruction information of Job2, the execution unit 203 controls the image output unit 27 such that the printing process is performed according to the selected print instruction information (S5).

When the authentication does not succeed (No in S3), the execution unit 203 rejects the printing process (S6).

### (2) In a case where selection operation of the file to be printed is omitted

First, the user operates the display operating unit 34 of the mobile terminal 3 to display the print setting screen. Then, the user operates the print setting screen to select the image data 312 of a file to be printed from the image data 312 stored in the storage unit 31.

Then, the user sets the printing condition for the selected image data 312 such as a color/monochrome and the number of sheets to be printed. The print instructing unit 301 generates the print instruction information 313 for giving an instruction to print the selected image data 312 under the set printing condition, and stores the print instruction information 313 in the storage unit 31. For example, by causing the selected image data to be displayed on the display operating unit 34, the print instructing unit 301 causes the mobile terminal 3 to enter a standby state for the near field communication and enables the P2P mode to be executable. A method of causing the mobile terminal to enter the standby state for the near field communication is not limited to the method of causing the selected image data to be displayed on the display operating unit 34, and it is desirable that it be in the state where the image data is selected, and the printing condition is set.

The near field communication unit 22 of the image forming apparatus 2 transmits a wireless signal at regular intervals and determines the presence or absence of a communication target. When the near field communication unit 32 of the mobile terminal 3 is brought close to (passed over) the near field communication unit 22 of the image forming apparatus 2 in the state where the image data selected by the user is displayed on the display operating unit 34, the near field communication unit 22 of the image forming apparatus 2 detects the mobile terminal 3 twice or more, and establishes the connection via the near field communication with the near field communication unit 32 of the mobile terminal 3.

When the near field communication unit 22 establishes the connection via the near field communication with the near field communication unit 32 of the mobile terminal 3 (Yes in S11), the transmitting unit 200 reads the IP address 211 from the storage unit 21, and transmits the IP address 211 to the mobile terminal 3 through the near field communication unit 22 (S 12).

When the IP address 211 transmitted from the image forming apparatus 2 is acquired through the near field communication unit 32, the IP address acquiring unit 300 of the mobile terminal 3 notifies the print instructing unit 301 of the acquired IP address 211.

The print instructing unit 301 performs control such that the print instruction information 313 is transmitted through the short range wireless communication unit 33 to the image forming apparatus 2 using the notified IP address 211 as the transmission destination. When the short range wireless communication unit 33 establishes the connection via the short range wireless communication with the short range wireless communication unit 23 (S13), the receiving unit 201 of the image forming apparatus 2 receives the print instruction information 313 via the short range wireless communication (S 14). The print instruction information 313 received by the receiving unit 201 is stored in the print instruction information list 213 of the storage unit 21.

When there are plural pieces of print instruction information in the print instruction information list 213 before the operation of passing the mobile terminal 3 is performed (Yes in

S15), the management unit 204 performs an interrupt processing to give priority to the print instruction information 313 received by the receiving unit 201 through the operation of passing the mobile terminal 3 (S16). The execution unit 203 executes the printing process according to the print instruction information 313 to which a priority is given (S 17). The image output unit 27 prints the image data on a recording medium under the printing condition set by the print instruction information 313 under the control of the execution unit 203.

Referring to Figs. 2A and 2B, the execution unit 203 is assumed to be executing Job1 before the operation of passing the mobile terminal 3 is performed as illustrated in Fig. 2A. At this time, the user is assumed to perform the operation of passing the mobile terminal 3, and the receiving unit 201 is assumed to receive the print instruction information 313. As illustrated in Fig. 2B, the management unit 204 sets Job1 as a management number of the print instruction information 313 received by the receiving unit 201, and gives priority to the print instruction information 313 by allocating "1" as an identifier so that it is the first in the output order.

The exemplary embodiment of the present invention has been described above, but the present invention is not limited to the exemplary embodiment, and various modifications can be made within the scope not departing from the gist of the present invention.

### (First modified example)

When priority is given in the output order to the print instruction information received by the image forming apparatus 2 to be printed earlier than other print instruction information through the operation of passing the mobile terminal 3 over the image forming apparatus 2, the management unit 204 may perform an interrupt processing on the print instruction information on which the printing process is being executed by temporarily interrupting the printing process being executed. The printing process of the print instruction information to which the priority is given can be performed while the printing process is temporarily interrupted.

### (Second modified example)

In the exemplary embodiment, the print instruction information 313 is transmitted through the short range wireless communication unit 33 since high-speed communication can be performed. However, for example, when an amount of data is small, the print instruction information 313 may be transmitted through the near field communication unit 32.

### (Third modified example)

In the exemplary embodiment, image data has been described as a file to be printed, but data that is dealt with by the mobile terminal 3 such as a text, a PDF, or a web page may be set as a file to be printed.

Further, in the flow of the exemplary embodiment, for example, a step may be added, deleted, changed, or exchanged within the scope not departing from the gist of the present invention.

Moreover, the program used in the exemplary embodiment may be recorded in a non-transitory computer readable recording medium such as a CD-ROM and provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

The description of the embodiments may disclose the following matters.
[1] An image forming apparatus, including:
   a receiving unit that receives print instruction information to print data;
   a memory that stores the print instruction information received by the receiving unit;
   a management unit that manages an output order of the print instruction information;
   an execution unit that executes a printing process according to the print instruction information in the output order; and
   a near field communication unit that performs near field communication,
   wherein, in a case where a connection via the near field communication is established, where the receiving unit receives the print instruction information and where there is a print instruction information previously stored in the memory, the management unit gives priority to the print instruction information in the output order over the print instruction information previously stored in the memory.
[2] In the image forming apparatus according to [1], in a case where the execution unit is executing a printing process according to the print instruction information previously stored in the memory, the management unit may give the priority to the print instruction information in the output order over the print instruction information previously stored in the memory by an interrupt processing in which the printing process being executed is temporarily interrupted.

## Claims

1. An information processing apparatus, comprising:
a receiving unit that receives print instruction information to print data;
a memory that stores the print instruction information received by the receiving unit;
a management unit that manages an output order of the print instruction information;
an execution unit that executes a printing process according to the print instruction information in the output order; and
a near field communication unit that performs near field communication, wherein, in a case where a connection via the near field communication is established, where the receiving unit receives the print instruction information and where there is a print instruction information previously stored in the memory, the management unit gives priority to the print instruction information in the output order over the print instruction information previously stored in the memory.

2. The information processing apparatus according to claim 1, wherein
in a case where the execution unit is executing a printing process according to the print instruction information previously stored in the memory, the management unit gives the priority to the print instruction information in the output order over the print instruction information previously stored in the memory by an interrupt processing in which the printing process being executed is temporarily interrupted.

3. An information processing method comprising:
receiving print instruction information to print data;
storing the print instruction information received in a memory;
executing a printing process according to the print instruction information in an output order; and
managing the output order of the print instruction information such that, in a case where the print instruction information is received in a state where a connection via the near field communication is established, and where there is a print instruction information previously stored in the memory, the print instruction information is given priority in the output order over the print instruction information previously stored in the memory.

4. An information processing program causing a computer to function as:
a receiving unit that receives print instruction information to print data and causes the print instruction information to be stored in a memory;
an execution unit that executes a printing process according to the print instruction information in an output order, and
a management unit that manages the output order of the print instruction information such that, in a case where the print instruction information is received in a state where a connection via the near field communication is established, and where there is a print instruction information previously stored in the memory, the print instruction information is given priority in the output order over the print instruction information previously stored in the memory.
